(19) Europäisches Patentamt
European Patent Office
Office européen des brevets

(11) **EP 2 509 746 B1**

(12) **EUROPÄISCHE PATENTSCHRIFT**

(45) Veröffentlichungstag und Bekanntmachung des Hinweises auf die Patenterteilung:
**24.09.2014   Patentblatt 2014/39**

(21) Anmeldenummer: **10768732.9**

(22) Anmeldetag: **13.10.2010**

(51) Int Cl.:
**B24B 19/16** *(2006.01)*     **B24D 7/06** *(2006.01)*
**B23K 11/30** *(2006.01)*

(86) Internationale Anmeldenummer:
**PCT/EP2010/065341**

(87) Internationale Veröffentlichungsnummer:
**WO 2011/069719 (16.06.2011 Gazette 2011/24)**

(54) **ANORDNUNG ZUM SCHLEIFEN VON ELEKTRODEN UND SCHLEIFSCHEIBE**

ASSEMBLY FOR GRINDING ELECTRODES AND GRINDING WHEEL

DISPOSITIF POUR MEULER DES ÉLECTRODES ET MEULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2009   DE 102009044857**

(43) Veröffentlichungstag der Anmeldung:
**17.10.2012   Patentblatt 2012/42**

(73) Patentinhaber: **Tamm, Rolf**
**88682 Salem (DE)**

(72) Erfinder: **Tamm, Rolf**
**88682 Salem (DE)**

(74) Vertreter: **Weisse, Renate**
**Patentanwälte Weisse & Wolgast**
**Bleibtreustrasse 38**
**10623 Berlin (DE)**

(56) Entgegenhaltungen:
**DE-A1- 10 010 520     DE-A1- 10 208 914**
**DE-A1-102006 052 904     DE-B3- 10 243 210**
**DE-U- 6 600 540**

**Beschreibung**

**Technisches Gebiet**

Die Erfindung betrifft eine Vorrichtung zur Bearbeitung von Schweißelektroden mit einer von einem Antriebsmotor über eine Welle angetriebenen Schleifscheibe mit einer ausgewählten Körnung, welche in einem Gehäuse umläuft, wobei das Gehäuse wenigstens einen Durchbruch zur Führung einer zu bearbeitenden Schweißelektrode in definierter Lage zu der Schleifscheibe vorgesehen ist.

Die Erfindung betrifft ferner eine Schleifscheibe zur Verwendung in einer solchen Vorrichtung und ein Verfahren zur Herstellung einer solchen Vorrichtung.

Schweißelektroden bestehen aus einem sehr harten und gegen hohe Temperaturen beständigen Material wie Wolfram. Es gibt Schweißelektroden von unterschiedlichem Querschnitt. Die Schweißelektroden laufen in einer Spitze oder in einer Schneide aus. Diese Form der Schweißelektroden hängt von der jeweiligen Anwendung ab. Die Spitzen der Schweißelektroden verschleißen im Betrieb.

Schweißelektroden können ohne Anschliff oder mit einer vorgefertigten Spitze gekauft werden. Nach dem Gebrauch ist die Spitze oder der Anschliff verschlissen. Die Schweißelektroden werden dann nachgeschliffen oder verworfen. Das ist wegen des hochwertigen Materials sehr teuer.

**Stand der Technik**

Es ist bekannt, Schweißelektroden an- oder nachzuschleifen. Das geschieht üblicherweise von Hand auf offenen Schleif- oder Trennscheiben. Dieses Verfahren ist ungenau und gefährlich. Weiterhin sind Vorrichtungen mit einer offenen Schleifscheibe bekannt, bei denen die Schweißelektroden durch eine Führungshülse unter einem bestimmten Winkel gegen die Schleifscheibe geführt werden. Auch solche Vorrichtungen sind aufwendig. Es ist insbesondere aufwendig, die Vorrichtung zur Anpassung an verschiedene Typen von Schweißelektroden oder an verschiedene Spitzen- oder Schneidenformen umzurüsten. Dabei ist insbesondere ein Austausch der Führungshülsen erforderlich.

Eine Vorrichtung, mit welcher Elektroden mit einer Vielzahl (z.B. 6) von unterschiedlichen Elektrodendurchmessern mit einer Vielzahl von unterschiedlichen Spitzenwinkeln (z.B. 4) und mit einer Vielzahl von Längen hergestellt werden können, ist ein wertvolles, kostensparendes Hilfsmittel.

Aus der DE 100 10 520 A1 ist eine Vorrichtung zur Bearbeitung von Schweißelektroden mit einer Schleifscheibe bekannt. Die Schleifscheibe läuft in einem Schleifscheibengehäuse um. Die Vorrichtung weist weiterhin einen Gehäuseaufsatz auf, welcher an dem Schleifscheibengehäuse befestigbar ist und wenigstens einen Durchbruch zur Führung einer zu bearbeitenden Schweißelektrode in definierter Lage zu der Schleifscheibe aufweist. Dabei fällt die Ebene der Schleifscheibe im wesentlichen mit der Trennebene zwischen dem Schleifscheibengehäuse und dem Aufsatz zusammen. Der Aufsatz kann eine Mehrzahl von gegeneinander versetzten, unterschiedlichen Durchbrüchen zur Aufnahme unterschiedlicher Typen von Schweißelektroden aufweisen. Der Aufsatz kann aber auch eine Mehrzahl von gegeneinander versetzten Durchbrüchen aufweisen, deren Achsen die Ebene der Schleifscheibe unter unterschiedlichen Winkeln schneiden. In dem Schleifscheibengehäuse kann ein sich über die Stirnfläche des Gehäuses erstreckender radialer Schlitz gebildet sein, durch welchen hindurch eine Schweißelektrode zum Durchtrennen an die Mantelfläche der Schleifscheibe anlegbar ist. Bei der offenbarten Vorrichtung ist die Schleifscheibe an einer Schleifscheibenaufnahme befestigt, die ihrerseits mit der Motorwelle des Antriebsmotors verbunden ist. Die gesamte Vorrichtung bildet eine tragbare Einheit.

DE 102 08 914 A1 offenbart eine Schleifscheibe mit einer im wesentlichen planen Stirnfläche und einer im Randbereich der Schleifscheibe vorgesehenen Mantelfläche, wobei die Schleifscheibe einen ersten, inneren Bereich und einen zweiten, äußeren Bereich aufweist. Bei der Schleifscheibe ist vorgesehen, dass der äußere Bereich der Schleifscheibe wesentlich dünner ist als der innere Bereich und ein Übergang zwischen den Bereichen vorgesehen ist. Der dünne äußere Bereich dient zum Schneiden von Elektroden und ist nicht mit Schleifmaterial beschichtet.

DE 66 00 540 U offenbart eine Schleifscheibe mit einem Grundkörper und einem mit Diamanten und einem Füllstoff aus anorganischem Werkstoff versehenen Belag. Der Grundkörper besteht aus Elektrographit und der Belag enthält duroplastischen Kunststoff.

Aus der DE 102 43 210 B3 ist eine Anordnung bekannt, bei der zwei parallele Schleifscheiben unterschiedlicher Körnung eingesetzt werden. Eine erste Schleifscheibe läuft in einem Hohlraum zwischen dem Motoraufsatz und einem ersten Gehäuseaufsatz um. Die zweite Schleifscheibe läuft in einem zweiten Hohlraum zwischen dem ersten Gehäuseaufsatz und dem zweiten Gehäuseaufsatz um. Die Gehäuseaufsätze sind mit Durchbrüchen zur Führung der Schweißelektroden versehen. Die bekannte Anordnung erlaubt den Einsatz unterschiedlicher Schleifscheiben ohne Umbau.

Die Anordnung verwendet neben einem Motor mit einem Motorgehäuse weitere Gehäuseteile: einen Motorflansch, der direkt am Motorgehäuse angeschraubt wird und wenigstens einen Gehäuseteil, in dem die Durchbrüche zur Führung der Elektroden vorgesehen sind. Die Durchbrüche erstrecken sich jeweils von der dem Motor abgewandten Seite im Gehäuseteil in Richtung auf die Schleifscheibe, die zwischen dem Motorflansch und dem Gehäuseteil umläuft. Je nach Anzahl der Schleifscheiben werden weitere Gehäuseteile aufgesetzt. Auch hier beginnen die Durchbrüche auf der dem Motor abgewanden Seite. Mit anderen Worten: Die Elektroden werden immer auf den Motor zu in die Durchbrüche eingeführt. Die Anordnung ist je nach Anzahl der Gehäuseteile vergleichsweise lang und benötigt eine lange Antriebswelle. Zur Befestigung der Gehäuseteile sind mehrere weitere Befestigungsbauteile, wie Schrauben, Muttern, Stifte etc. erforderlich.

DE 10 2006 052904 A1 offenbart eine Anordnung, bei welcher zwei Schleifscheiben unterschiedlicher Körnung praktisch in einer Ebene in einem gemeinsamen Hohlraum umlaufen. Die Abriebflächen sind bei der bekannten Anordnung voneinander abgewandt. Zwischen den Schleifscheiben ist eine dritte Scheibe größeren Durchmessers angeordnet. An dieser Scheibe können Elektroden geschnitten werden.

Die Bohrungen oder Durchbrüche, in denen die Elektroden geführt werden, werden mit hoher Präzision bezüglich des Winkels gefertigt. Dabei wird davon ausgegangen, dass die zugehörige Schleifscheibe in definierter Lage relativ zum Gehäuse rotiert. Bei unterschiedlicher Dicke oder Verwendung mehrerer Schleifscheiben ist dies nicht mehr gewährleistet. Dann entspricht der Anschleifwinkel nicht mehr dem Sollwert.

Bei der Herstellung von Schleifscheiben wird ein Rohling in ein Bad getaucht, wobei das Schleifmittel auf den Rohling aufgebracht wird. Entsprechend ist es bei diesem Verfahren aufwändig Schleifscheiben mit einer unterschiedlichen Körnung auf der Ober- und Unterseite herzustellen. Der Rohling ist eine plane Scheibe. Je nach Körnung ist die fertige Scheibe bei einer groben Körnung dicker als bei einer feinen Körnung. Dies führt zu unterschiedlichen Dicken. Die Schleifebene liegt dann nicht immer bei jeder Körnung in der Trennebene zwischen zwei Gehäuseteilen. Durch den Druck der Schraube beim Festziehen der Schleifscheibe besteht die Gefahr, dass die Scheibe sich verbiegt. Das ist unerwünscht.

Bei den bekannten Schleifscheiben wird das beste Schleifergebnis im äußeren Bereich mit der größten Geschwindigkeit der Schleifscheibe erreicht. Die Schleifscheibe darf jedoch nicht beliebig groß sein, da bei hohen Drehzahlen laterale Kräfte und unerwünschte Schwingungen auftreten können. Außerdem erfordern große Schleifscheiben ein großes Gehäuse, welches die Anordnung unhandlich macht.

**Offenbarung der Erfindung**

Es ist Aufgabe der Erfindung, eine handliche Schleifanordnung der eingangs genannten Art zu schaffen, welche für alle Körnungen gleichermaßen geeignet ist und welche mit geringeren Fertigungstoleranzen gefertigt werden kann. Es ist ferner Aufgabe der Erfindung, die Qualität des Schleifergebnisses zu verbessern.

Erfindungsgemäß wird die Aufgabe durch durch eine Vorrichtung zur Bearbeitung von Schweißelektroden nach Patentanspruch 1, eine Schleifscheibe zur Verwendung in einer solchen Vorrichtung nach Patentanspruch 6 sowie durch ein Verfahren zur Herstellung einer solchen Vorrichtung nach Patentanspruch 9 gelöst. Die Vertiefung wird bereits bei der Herstellung des Rohlings berücksichtigt. Bei einer groben Körnung ist eine tiefere Vertiefung erforderlich, als bei einer feinen Körnung.

Vorzugsweise ist auch der Durchmesser des Rohlings an die Körnung des Schleifmaterials angepasst. Dann werden die gleichen Außenabmessungen für alle Schleifscheiben erreicht. Die Fertigungstoleranzen dürfen dann geringer sein. Die Gehäuseabmessungen werden minimiert.

Vorzugsweise erstreckt sich die Vertiefung von einem unbeschichteten Mittenbereich bis zum Rand der Schleifscheibe. Der Mittenbereich, welcher nicht zum Schleifen vorgesehen ist, hat in allen Fällen die gleiche Dicke. Auf diese Weise wird eine Schleifscheibe hergestellt, die unabhängig von der Körnung immer die gleiche Dicke aufweist. Die auf die Scheibe wirkenden Kräfte werden so minimiert. Die Scheibe läuft unabhängig von der Körnung immer in der Trennebene zwischen den beiden Gehäuseteilen. Dadurch wird der Anschleifwinkel mit hoher Präzision gefertigt. Im äußeren Bereich ist die Geschwindigkeit der Schleifscheibe am größten. Dort wird das beste Schleifergebnis erreicht.

In einer bevorzugten Ausgestaltung ist vorgesehen, dass:

(a) die Schleifscheibe einen verjüngten Schneidrand aufweist,

(b) ein senkrecht zur Schleifscheibe verlaufender Schlitz im Gehäuse zum Schneiden einer Schweißelektrode mit dem Schneidrand vorgesehen ist, und

(c) der Schneidrand eine Ebene bildet, die in der Ebene der übrigen Schleifscheibe liegt, so dass die Schleifscheibe im Bereich des Umfangs ohne Versatz in den Schneidrand übergeht.

Der verjüngte Schneidrand dient zum Schneiden der Elektrode. Indem die Schleifscheibe an einer Seite ohne Versatz in den Schneidrand übergeht, steht dort ein größerer Bereich als Schleiffläche zum Schleifen zur Verfügung. Eine separate Scheibe größeren Durchmessers ist nicht erforderlich. Dadurch wird der Aufbau der Anordnung vereinfacht. Alle Scheiben haben den gleichen Durchmesser.

In einem besonders bevorzugten Ausführungsbeispiel der Erfindung sind zwei aufeinanderliegende Schleifscheiben unterschiedlicher Körnung vorgesehen. Dann kann ein Feinschliff und ein Grobschliff ohne Umbau mit dem gleichen Gerät erreicht werden. Durch die Verwendung von Schleifscheiben gleicher Dicke ist es dabei unerheblich, welche Körnung bei den Scheiben gewählt wird.

Vorzugsweise ist der Schneidrand auf der der jeweils anderen Schleifscheibe abgewandten Seite der Schleifscheibe vorgesehen. Dann steht der größere Schleifbereich mit dem größeren Durchmesser zur Ver-

füügung.

Ausgestaltungen der Erfindung sind Gegenstand der Unteransprüche. Ein Ausführungsbeispiel ist nachstehend unter Bezugnahme auf die beigefügten Zeichnungen näher erläutert.

**Kurze Beschreibung der Zeichnungen**

Fig.1      ist eine Explosionsdarstellung einer Vorrichtung zum Schleifen von Elektroden mit zwei Schleifscheiben.

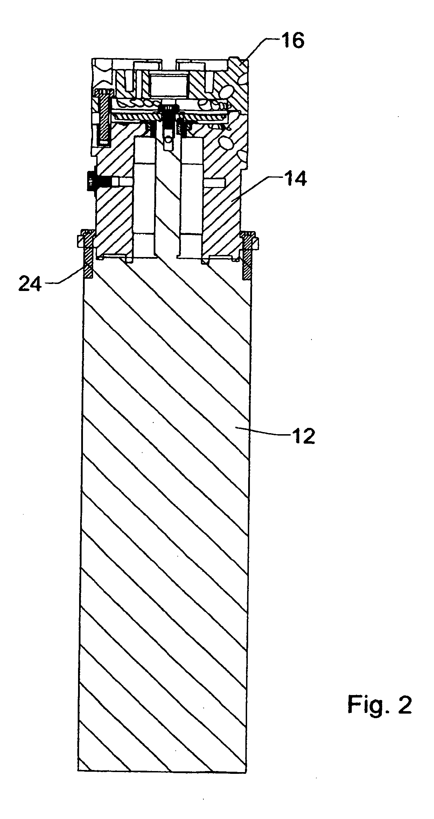

Fig.2      ist ein Querschnitt durch eine Vorrichtung zum Schleifen von Elektroden mit einer Schleifscheibe.

Fig.3      zeigt den Kopf der zusammengesetzten Vorrichtung mit einer Schleifscheibe im Detail.

Fig.4a-e      zeigen Schnitt, Seitenansichten und eine perspektivische Ansicht einer Schleifscheibe im Detail.

Fig.5      ist ein Querschnitt durch eine Vorrichtung zum Schleifen von Elektroden mit zwei Schleifscheiben.

Fig.6      ist eine detailierte Explosionsdarstellung der Anordnung mit zwei Schleifscheiben aus Fig.1 und 5.

**Beschreibung des Ausführungsbeispiels**

In den Figuren bezeichnet 10 allgemein eine Vorrichtung zum Schleifen von Schweißelektroden aus Wolfram. Die Vorrichtung 10 umfasst einen Motor mit einem Motorgehäuse 12, einen an dem Motorgehäuse 12 angeschraubten Motorflansch 14 und ein auf dem Motorflansch 14 aufgesetztes zylindrisches Gehäuseteil 16. Das Gehäuseteil 16 wird auf nachstehend beschriebene Weise mit dem Motor und dem Motorflansch verbunden. Im Bereich zwischen dem Motorflansch 14 und dem Gehäuseteil 16 läuft eine Schleifscheibenanordnung 18 mit Schleifscheiben 20 und 22 unterschiedlicher Körnung um.

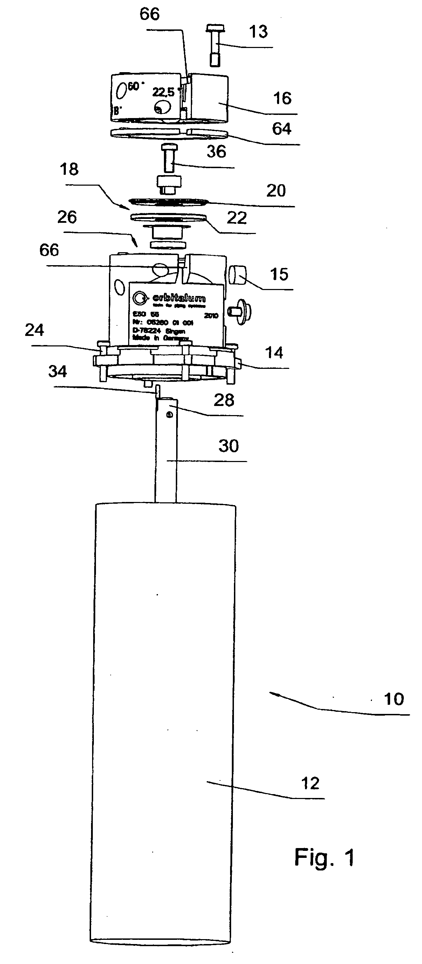

Der Flansch ist mit Bohrungen versehen. Über diese Bohrungen wird der Motorflansch 14 am Motorgehäuse 12 auf die in Fig.1 dargestellte Weise mit Schrauben 24 verschraubt. Das Gehäuseteil 16 wird mit einer Schraube 13 und einer Mutter 15 fest mit dem Motorflansch 14 verbunden. Hierzu weist das Gehäuseteil 16 eine Durchgangsbohrung und der Motorflansch eine Aufnahme für die Mutter 15 auf.

An dem dem Motor abgewandten Ende 26 des Motorflansches 14 ist eine scheibenförmige Vertiefung vorgesehen. Diese Vertiefung dient der Aufnahme der Schleifscheibe 22. Die Welle 30, mit welcher die Schleifscheibenanordnung 18 mit dem Motor verschraubt wird, ist gleichzeitig die Motorwelle.

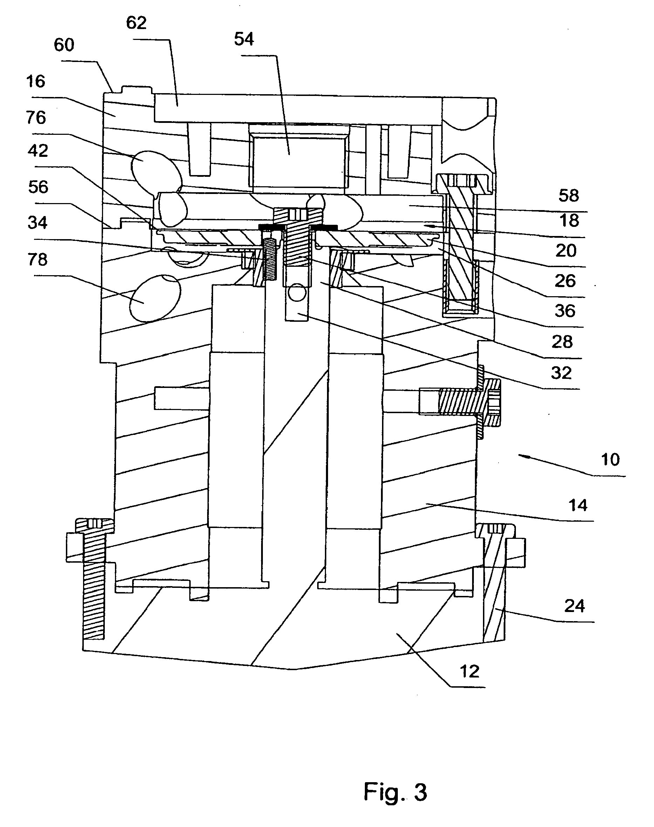

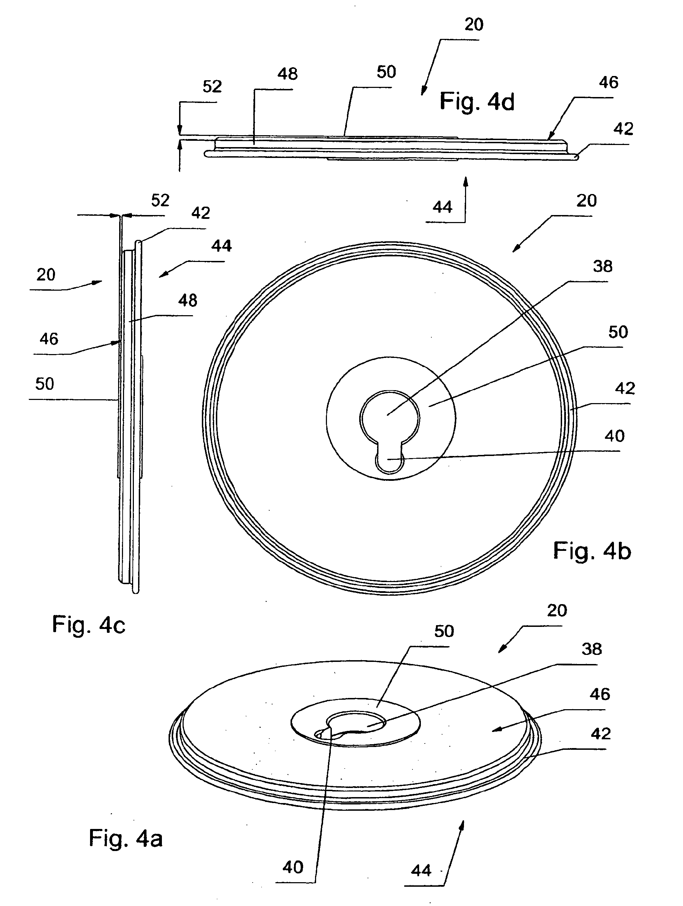

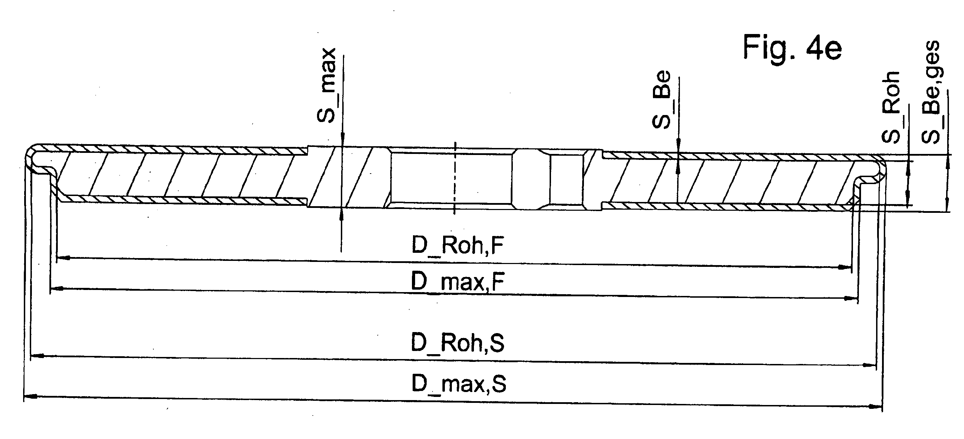

Die Welle 30 weist einen vorderen Teil 28 auf. Weiterhin weist die Welle 30 mit vorderem Teil 28 eine Bohrung 32 mit einem Innengewinde auf. Außerdem ist ein außeraxialer Stift 34 an dem vorderen Teil 28 befestigt. Die Schleifscheiben 20 und 22 der Schleifscheibenanordnung 18 sind mit einer zentralen Bohrung 38 und einer damit verbundenen, außeraxialen Bohrung 40 versehen. Diese sind in Figur 4 a und 4b erkennbar. Die Schleifscheiben 20 und 22 - oder im Fall nur einer Schleifscheibe, wie dies in Figur 3 dargestellt ist, die Schleifscheibe 20 - werden so auf die Welle 30 aufgesetzt und mit einer Schraube 36 verschraubt, dass die zentrale Bohrung 38 mit der axialen Bohrung 32 in der Welle 30 fluchtet und der Stift 34 durch die außeraxiale Bohrung 40 in der Motor-seitigen Schleifscheibe 22 ragt. Die Rotation erfolgt um die Achse der Bohrungen 32 und 38, wobei der Stift 34 in die Bohrung 40 eingreift und die Antriebskraft auf die Schleifscheibenanordnung 18 überträgt. Eine Zentrierhülse 37 wird von oben durch die Mittenbohrungen 38 der beiden Schleifscheiben 20 und 22 gesteckt. Die Zentrierhülse 37 weist am oberen, dem Motor abgewandten Ende eine Aufnahme 39 für den Schraubenkopf der Schraube 36 auf. Die Zentrierhülse 37 sorgt dafür, dass beide Schleifscheiben 20 und 22 um die gleiche Achse rotieren. Die Zentrierhülse 37 weist ferner eine vorspringende Nase 41 auf. Die Nase greift in die außeraxialen Bohrungen 40 der Schleifscheiben 20 und 22. Auf diese Weise wird die Antriebskraft des Motors von der ersten, motorseitigen Schleifscheibe 22 über die Zentrierhülse 37 auf die zweite, obere Schleifscheibe 20 übertragen. Die Zentrierhülse 37 wird gemeinsam mit den Schleifscheiben 20 und 22 mit der Schraube 36 an der Welle verschraubt. Dies ist besonders gut in Figur 3 erkennbar.

In dem Ausführungsbeispiel aus Figur 1,5 und 6 mit zwei Schleifscheiben 20 und 22 umfasst die Schleifscheibenanordnung 18 eine grobkörnige Schleifscheibe 20 und eine ansonsten gleichermaßen aufgebaute, feinkörnige Schleifscheibe 22. Die Schleifscheiben 20 weisen einen besonders feinen Rand 42 auf. Dieser Rand 42 dient zum Schneiden der Elektroden mit verbessertem Schneidverhalten. Der Rand ist so an die Schleifscheibe 20 angeformt, dass er mit einer Seite in der Schleifebene liegt. Dies ist in Figuren 4d und 4c besonders gut zu erkennen. Auf diese Weise ist eine der Schleifflächen, nämlich die Schleiffläche 44 auf der Seite des Randes 42 größer, als die gegenüberliegende Schleiffläche 46. Es versteht sich, dass bei Verwendung von zwei Schleifscheiben, wie dies in dem Ausführungsbeispiel aus Figur 1,5 und 6 der Fall ist, diese Schleifscheiben so angeordnet sind, dass die größeren Schleifflächen außen liegen. Dann steht mehr Schleiffläche zur Verfügung. Der äußere Bereich weist eine höhere lokale Geschwindigkeit und eine größere Schleiffläche auf. Entsprechend kann hier ein besseres Schleifergebnis erzielt werden.

Die Schleifscheiben 20 und 22 werden aus einem Rohling 48 gefertigt. Der Rohling 48 wird in ein Bad mit Schleifmittel getaucht. Das Schleifmittel, etwa Diamantsplitter einer ausgewählten Körnung, haftet dann an dem Rohling. Je nach Körnung werden unterschiedliche Rohlinge verwendet. Jeder Rohling hat einen unbeschichteten Mittenbereich 50. In diesem Mittenbereich 50 sind die Bohrungen 38 und 40 vorgesehen. Der Mittenbereich 50 hat eine für alle Rohlinge gleiche, von der Körnung unabhängige Standarddicke. Entsprechend liegen die Scheiben bei Verwendung mehrerer Scheiben hier vollständig plan aufeinander. Die Rohlinge weisen ferner eine bis zum Rand reichende, flächenhafte Vertiefung auf. Die Vertiefung bildet quasi einen langgestreckten, sich über den gesamten Winkelbereich des Rohlings erstreckenden Absatz. In der Ebene des Randes 42 hat der Absatz einen größeren Außendurchmesser, als in der gegenüberliegenden Ebene. Dies ist in Figur 4c und 4d zu erkennen. Die Tiefe der Vertiefung, in Figur 4d und 4c mit 52 bezeichnet, entspricht der durchschnittlichen Dicke der ausgewählten Körnung. Wenn eine feine Körnung ausgewählt wird, hat die Vertiefung eine geringe Tiefe 52. Wenn eine grobe Körnung ausgewählt wird, hat die Vertiefung eine größere Tiefe 52. In jedem Fall ist die Tiefe 52 der Vertiefung so ausgewählt, dass die Dicke der Schleifscheibe über ihre gesamte Fläche im wesentlichen gleich ist. Die Schleifscheiben liegen dann plan aufeinander bzw. erfordern immer den gleichen Hohlraum, in dem sie umlaufen unabhängig von der Körnung.

Figur 4e illustriert die Größenverhältnisse des beschichteten Rohlings entsprechend den Gleichungen:

$$S_{Be,\,ges} = S_{Roh} + 2x\ S_{Be} \leq S_{max}$$

$$D_{max,S} = D_{Roh,S} + 2x\ S_{Be} \leq D_{Gehäuse}$$

$$D_{max,\,S} = D_{Roh} + 2x\ S_{Be} \leq D_{Gehäuse}$$

mit den in der Figur dargestellten Definitionen für die Variablen und $D_{Gehäuse}$ dem Gehäusedurchmesser.

Wenn die Schleifscheibenanordnung 18 mit der Welle 30 eingesetzt ist, wird das im wesentlichen zylindrische Gehäuseteil 16 und - bei zwei Schleifscheiben - ein Distanzring 64 koaxial auf den Motorflansch 14 aufgesetzt.

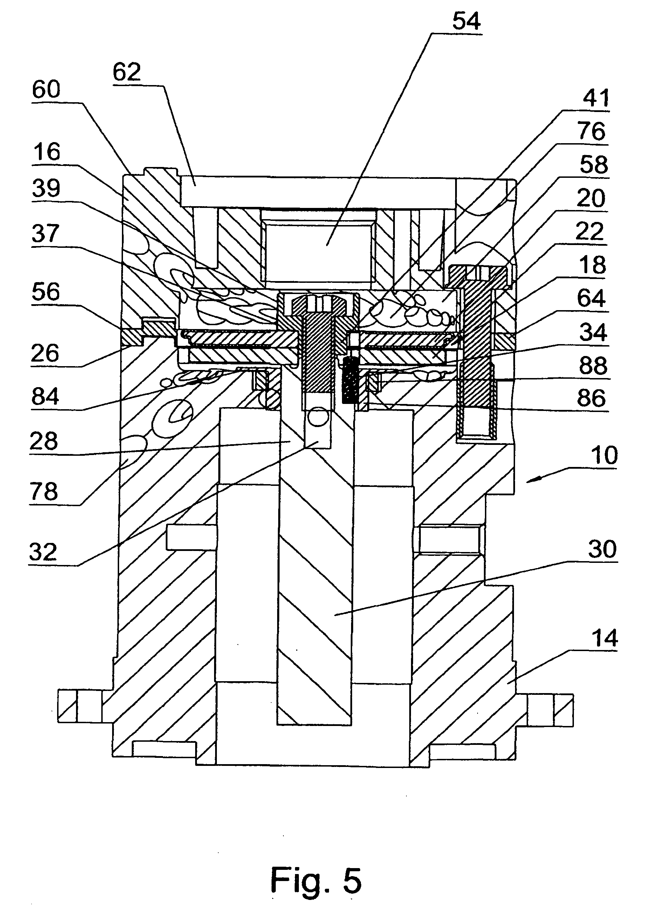

Das Gehäuseteil 16 ist mit einer Mittenbohrung 54 versehen. Diese ist in Figur 3 und 5 zu erkennen. Die Mittenbohrung 54 fluchtet mit den Bohrungen 38 der Schleifscheibenanordnung 18 und der Rotationsachse der Welle 30. Um die Bohrung 54 herum ist an der dem Motor zugewandten Planseite 56 eine scheibenförmige Vertiefung 58 vorgesehen. Auf der dem Motor abgewandten Planseite 60 des Gehäuseteils 16 ist eine Vertiefung 62 vorgesehen Diese Vertiefungen 58 und 62 haben in etwa die gleichen Dimensionen wie die Vertiefung auf der Planseite 26 im Motorflansch 14. Die Vertiefungen in der Planseite 26 und die Vertiefung 58 bilden bei zusammengesetzter Anordnung zusammen einen Hohlraum. Der Hohlraum dient der Aufnahme der Schleifscheibenanordnung 18. Dabei ist im Ausführungsbeispiel mit zwei Schleifscheiben, wie es in Figur 1, 5 und 6 dargestellt ist, zwischen dem Motorflansch 14 und dem Gehäuseteil 16 ist der Distanzring 64 angeordnet. Die Dicke des Distanzrings 64 entspricht der Dicke einer Schleifscheibe 20 bzw. 22. Entsprechend wird die Differenz durch die zusätzliche Schleifscheibe ausgeglichen. Es können unabhängig von der Anzahl der Schleifscheiben immer der gleiche Motorflansch 14 und und das gleiche Gehäuseteil 16 mit der gleichen Vertiefung 26 bzw. 58 verwendet werden. Der Anschleifwinkel ändert sich nicht.

Die Vertiefung 62 an der oberen Planseite 60 dient zur Aufnahme von Mitteln zur Beseitigung von Schleifrückständen wie Staub und Schleifspäne. Das Gehäuse 16, der Ring 64 und der Motorflansch 14 weisen ferner einen Längsschlitz 66 in radialer Richtung auf, welcher sich über die gesamte Dicke der Anordnung erstreckt. Der Längsschlitz 66 ist in Figur 1 zu erkennen. Die Schlitze 66 in Motorflansch 14, Ring 64 und Gehäuse 16 liegen übereinander. Der so gebildete Schlitz 66 ist breit genug, dass die Elektroden dort eingeführt werden können. Bei rotierender Schleifscheibenanordnung 18 kann die Elektrode an dem Rand 42 einer der Schleifscheiben bzw. an einer Schleifscheibe gekürzt werden, indem das verbrauchte Elektrodenende oder die neu angeschliffene Elektrodenseite abgeschnitten wird.

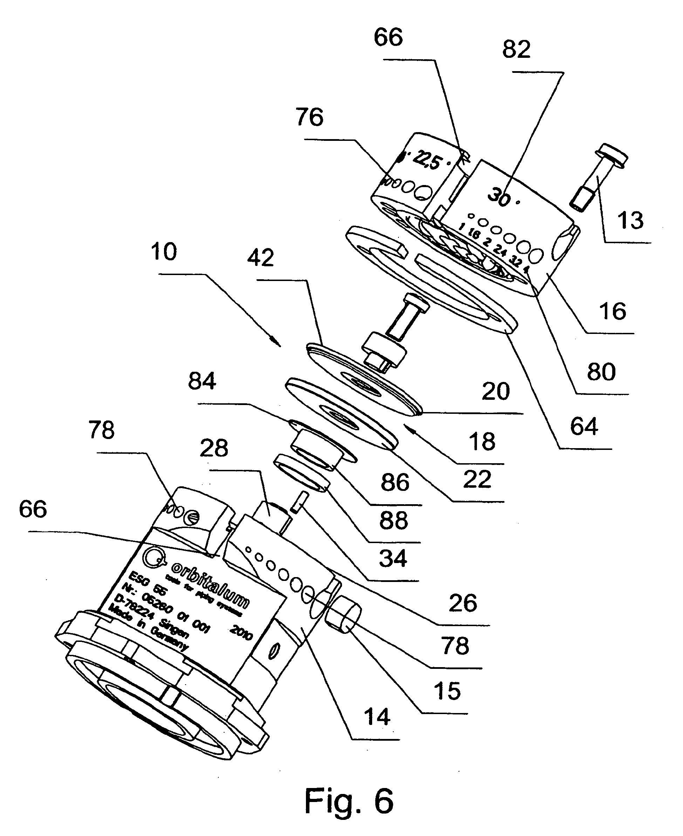

Das Gehäuse 16 und der Motorflansch 14 weisen Gruppen 76 und 78 von Durchbrüchen in Form von Bohrungen auf. Die Bohrungen erstrecken sich jeweils vom Umfang des Gehäuses 16 bzw. Motorflansches 14 zu den zugehörigen Planseiten in Richtung auf die dem Gehäuse bzw. Motorflansch nächstliegende Schleifscheibe. Jede Gruppe umfasst auf bekannte Weise eine Vielzahl Bohrungen (auch als Durchbrüche bezeichnet) unterschiedlichen Durchmessers, der jeweils oberhalb oder unterhalb der Bohrung durch eine Gravur 80 angegeben ist. Diese ist in Figur 6 erkennbar. Der Winkel, unter dem eine in eine Bohrung beziehungsweise einen Durchbruch eingeführte Elektrode auf die Schleifscheibe trifft, ist dabei innerhalb einer Gruppe von Bohrungen gleich. Die Bohrung hat also beispielsweise einen Durchmesser von 1,6 mm und einen Anschleifwinkel von 22,5 Grad. Der Anschleifwinkel ist durch eine weitere Gravur oberhalb der ersten Gravur für die jeweilige Gruppe angegeben. Beispielsweise sind vier verschiedene Winkel bei einem Anschliff möglich. Dabei können Elektroden mit beispielsweise bis zu sechs unterschiedlichen Durchmessern verwendet werden. Die Elektrode wird durch die Bohrung so gut geführt, dass reproduzierbare Ergebnisse ohne Aufwand oder Gefahr erhalten werden.

Mehr Anschleifwinkel, weitere Elektrodendurchmesser oder die Verwendung einer Schlefffläche mit unterschiedlicher Körnung werden berücksichtigt, indem der Motorflansch 14 ebensolche Bohrungen 78 aufweist und zwei Schleifscheiben verwendet werden, wie dies in Figur 1,5 und 6 dargestellt ist. Eine Elektrode, kann zum Beispiel zunächst grob vorgeschliffen werden, indem sie durch eine Bohrung im Gehäuse 16 geführt wird. Dabei wird für die Schleifscheibe 20, deren Abriebfläche nach oben in der Darstellung zeigt, eine grobe Körnung vorgesehen. Zum Feinschliff wird dann eine Bohrung im Motorflansch 14 verwendet. Die zugehörige Schleifscheibe 22, deren Abriebfläche nach unten zeigt, weist eine feine Körnung auf. Sowohl die Bohrungen 76 im Gehäuseteil 16, als auch die Bohrungen 78 im Motorflansch wurden mit der gleichen Maschine mit identischen Einstellungen gefertigt. Die Bohrungen sind also mit geringen Abweichungen identisch. Die Abriebfläche liegt bei der vorliegenden Anordnung immer in der gleichen Ebene. Auf diese Weise wird ein besonders geringer Fehler beim Anschleifwinkel erreicht. Im vorliegenden Beispiel sind die Bohrungen 76 so gefertigt, dass der angegebene Anschleifwinkel erreicht wird, wenn die Abriebfläche in der Ebene 60 liegt und die Bohrungen 78, wenn die Abriebfläche in der eine Scheibendicke unterhalb der Ebene 26 liegenden Ebene liegt.

Das Gehäuse 16 weist weiterhin eine Gruppe von Bohrungen auf, welche sich senkrecht von der Oberseite zur Unterseite des Gehäuses 16 erstrecken. Auch die Bohrungen dieser Gruppe haben unterschiedliche Durchmesser, welche den Durchmessern der übrigen Gruppen entsprechen. Die Bohrungen der Gruppe ermöglichen das senkrechte Schleifen der Elektrodenspitzen.

Die gesamte Anordnung ist auf ein Handgerät aufgeschraubt. Dabei sitzt die Schleifscheibenanordnung unmittelbar vor dem Kugellager der Motorwelle 30. Dies verhindert ein Schlingern bei hohen Drehzahlen.

Zur Vermeidung des Eindringes von Staub, abgetragenem Material und Schleifmittel und dergleichen in den Motor oder das Lager ist eine Prallscheibe 84 vorgesehen. Die Prallscheibe 84 wird zwischen der motorseitigen Schleifscheibe 22 und dem Motorflansch mit einer Hülse 86 auf das obere Ende 28 der Motorwelle 30 gestülpt und rotiert mit. Die motorseitige, untere Fläche der Prallscheibe 84 ist im Bereich des Bodens der Vertiefung in der Planseite 26. Um die Hülse 86 herum ist ein Filzring 88 angeordnet, der nicht mitrotiert. Der Filzring 88 vermeidet weiteres Eindringen von Staub, abgetragenem Material und Schleifmittel in den Motor und das Lager. Der Stift 34 erstreckt sich durch eine Bohrung in der Prallscheibe 84. Auf diese Weise wird nicht nur die Schleifscheibenanordnung 18, sondern auch die Prallscheibe 84 von der Welle 30 angetrieben.

Die vorliegende Anordnung wurde anhand von zwei konkreten Ausführungsbeispielen, einmal mit einer und einmal mit zwei Schleifscheiben erläutert. Es versteht sich, dass die Anordnung variiert werden kann. So ist es beispielsweise möglich, ein weiteres Gehäuseteil, ähnlich wie das Gehäuseteil 16 aufzusetzen und in dem dazwischenliegenden Hohlraum weitere Schleifscheiben vorzusehen. Auch sind unterschiedliche Gestaltungen der Bohrungen zur Führung der Elektroden denkbar.

## Patentansprüche

1. Vorrichtung (10) zur Bearbeitung von Schweißelektroden mit einer von einem Antriebsmotor über eine Welle (30) angetriebenen Schleifscheibe (20; 22) mit einer ausgewählten Körnung, welche in einem Gehäuse (14, 16) umläuft, wobei das Gehäuse (14, 16) wenigstens einen Durchbruch (76, 78) zur Führung einer zu bearbeitenden Schweißelektrode in definierter Lage zu der Schleifscheibe (20, 22) vorgesehen ist, **dadurch gekennzeichnet, dass** eine an die Körnung des Schleifmaterials angepasste Vertiefung in dem zum Schleifen vorgesehenen Bereich (46) der Oberfläche der Schleifscheibe (20, 22) vorgesehen ist, in welcher Schleifmaterial aufgebracht ist, wobei die Tiefe der Vertiefung der durchschnittlichen Dicke der ausgewählten Körnung entspricht und so ausgewählt ist, dass die Dicke der Schleifscheibe über ihre gesamte Fläche im wesentlichen gleich ist.

2. Vorrichtung (10) nach Anspruch 1, **dadurch gekennzeichnet, dass** die Vertiefung sich von einem unbeschichteten Mittenbereich (50) bis zum Rand der Schleifscheibe (20, 22) erstreckt.

3. Vorrichtung (10) nach Anspruch 1 oder 2, **dadurch gekennzeichnet, dass**

    (a) die Schleifscheibe (20, 22) einen verjüngten Schneidrand (42) aufweist,
    (b) ein senkrecht zur Schleifscheibe verlaufender Schlitz (66) im Gehäuse (14, 16, 64) zum Schneiden einer Schweißelektrode mit dem Schneidrand (42) vorgesehen ist, und
    (c) der Schneidrand (42) eine Ebene (44) bildet, die in der Ebene der übrigen Schleifscheibe liegt, so dass die Schleifscheibe im Bereich des Umfangs ohne Versatz in den Schneidrand übergeht.

4. Vorrichtung (10) nach einem der vorgehenden Ansprüche, **dadurch gekennzeichnet, dass** zwei aufeinanderliegende Schleifscheiben (20, 22) unterschiedlicher Körnung vorgesehen sind.

5. Vorrichtung (10) nach Anspruch 4, **dadurch gekennzeichnet, dass** der Schneidrand (42) auf der der jeweils anderen Schleifscheibe abgewandten Seite der Schleifscheibe vorgesehen ist.

6. Schleifscheibe (20, 22) zur Verwendung in einer Vorrichtung (10) nach einem der vorgehenden Ansprüche, **dadurch gekennzeichnet, dass** eine an die Körnung des Schleifmaterials angepasste Vertiefung in dem zum Schleifen vorgesehenen Bereich (46) der Oberfläche der Schleifscheibe (20. 22) vorgesehen ist, in welcher Schleifmaterial aufgebracht ist, wobei die Tiefe der Vertiefung der durchschnittlichen Dicke der ausgewählten Körnung entspricht und so ausgewählt ist, dass die Dicke der Schleifscheibe über ihre gesamte Fläche im wesentlichen gleich ist.

7. Schleifscheibe (20, 22) nach Anspruch 6, **dadurch gekennzeichnet, dass** die Vertiefung sich von einem unbeschichteten Mittenbereich (50) bis zum Rand der Schleifscheibe erstreckt.

8. Schleifscheibe nach Anspruch 6 oder 7, **dadurch gekennzeichnet, dass**

   (a) die Schleifscheibe einen verjüngten Schneidrand (42) aufweist, und
   (b) der Schneidrand eine Ebene bildet, die in der Ebene der übrigen Schleifscheibe liegt, so dass die Schleifscheibe im Bereich des Umfangs ohne Versatz in den Schneidrand übergeht.

9. Verfahren zur Herstellung einer Vorrichtung (10) zur Bearbeitung von Schweißelektroden mit einer von einem Antriebsmotor über eine Welle (30) angetriebenen Schleifscheibe (20; 22) mit einer ausgewählten Körnung, welche in einem Gehäuse (14, 16) umläuft, wobei das Gehäuse (14, 16) wenigstens einen Durchbruch (76, 78) zur Führung einer zu bearbeitenden Schweißelektrode in definierter Lage zu der Schleifscheibe (20, 22) vorgesehen ist, **dadurch gekennzeichnet, dass** eine an die Körnung des Schleifmaterials angepasste Vertiefung in dem zum Schleifen vorgesehenen Bereich (46) der Oberfläche der Schleifscheibe (20, 22) hergestellt wird, in welcher Schleifmaterial aufgebracht wird, wobei die Tiefe der Vertiefung der durchschnittlichen Dicke der ausgewählten Körnung entspricht und so ausgewählt ist, dass die Dicke der Schleifscheibe über ihre gesamte Fläche im wesentlichen gleich ist.

**Claims**

1. Device (10) for processing welding electrodes with a grinding wheel (20; 22) having a selected grain size driven by a driving motor with a shaft (30), which runs in a housing (14, 16), wherein at least one opening (76, 78) is provided in the housing (14, 16) for guiding a welding electrode for processing in a defined position relative to the grinding wheel (20, 22) **characterized in that** a recess adapted to the grain size of the grinding material is provided in the range (46) provided for grinding on the surface of the grinding wheel (20, 22) which is coated with grinding material wherein the depth of the recess corresponds to the average thickness of the selected grain size and is selected such that the thickness of the grinding wheel is essentially the same over the entire surface.

2. Device (10) according to claim 1, **characterized in that** the recess extends from an uncoated center range (50) to the edge of the grinding wheel (20, 22).

3. Device (10) according to any of claims 1 or 2, **characterized in that**

   (a) the grinding wheel (20, 22) is provided with a thinner cutting edge (42),
   (b) a slit (66) is provided in the housing (14, 16, 64) extending perpendicular to the grinding wheel for cutting a welding electrode with the cutting edge (42), and
   (c) the cutting edge (42) forms a plane (44) laying in the plane of the remaining portion of the grinding wheel in such a way that the grinding wheel forms the cutting edge in the range of the circumference without a step.

4. Device (10) according to any of the preceding claims, **characterized in that** two grinding wheels (20, 22) laying on top of each other and having a different grain size are provided.

5. Device (10) according to claim 4, **characterized in that** the cutting edge (42) is provided on the side opposite to the other grinding wheel.

6. Grinding wheel (20, 22) for use in a device (10) according to any of the preceding claims, **characterized in that** a recess adapted to the grain size of the grinding material is provided in the range (46) provided for grinding on the surface of the grinding wheel (20, 22) which is coated with grinding material wherein the depth of the recess corresponds to the average thickness of the selected grain size and is selected such that the thickness of the grinding wheel is essentially the same over the entire surface.

7. Grinding wheel (20, 22) according to claim 6, **characterized in that** the recess extends from an uncoated center range (50) to the edge of the grinding wheel (20, 22).

8. Grinding wheel according to any of claims 6 or 7, **characterized in that**

   (a) the grinding wheel is provided with a thinner cutting edge (42), and

(b) the cutting edge forms a plane laying in the plane of the remaining portion of the grinding wheel in such a way that the grinding wheel forms the cutting edge in the range of the circumference without a step.

9. Method for manufacturing a device (10) for processing welding electrodes with a grinding wheel (20; 22) having a selected grain size driven by a driving motor with a shaft (30), which runs in a housing (14, 16), wherein at least one opening (76, 78) is provided in the housing (14, 16) for guiding a welding electrode for processing in a defined position relative to the grinding wheel (20, 22) **characterized in that** a recess adapted to the grain size of the grinding material is produced in the range (46) provided for grinding on the surface of the grinding wheel (20, 22) by coating with grinding material wherein the depth of the recess corresponds to the average thickness of the selected grain size and is selected such that the thickness of the grinding wheel is essentially the same over the entire surface.

**Revendications**

1. Dispositif (10) pour l'usinage d'électrodes de soudage à l'aide d'un disque d'affûtage (20 ; 22) à grain choisi, entraîné par un moteur d'entraînement via un arbre (30) et qui est en rotation dans un boîtier (14, 16), le boîtier (14, 16) prévoyant au moins un percement (76, 78) pour guider une électrode de soudage à usiner dans une position définie par rapport au disque d'affûtage (20 ; 22), **caractérisé en ce qu'**un creux adapté au grain du matériau d'affûtage est prévu dans la zone (46) de la surface du disque d'affûtage (20, 22), prévue pour l'affûtage, dans laquelle est placé un matériau d'affûtage, la profondeur du creux correspondant à l'épaisseur moyenne du grain choisi et étant choisie de sorte que l'épaisseur du disque d'affûtage est essentiellement constante sur toute la surface.

2. Dispositif (10) selon la revendication 1, **caractérisé en ce que** le creux s'étend d'une zone médiane (50) non recouverte d'un revêtement jusqu'au bord du disque d'affûtage (20, 22).

3. Dispositif (10) selon la revendication 1 ou 2, **caractérisé en ce que**

(a) le disque d'affûtage (20, 22) présente un bord tranchant (42) rétréci,
(b) une fente (66) perpendiculaire au disque d'affûtage est prévue dans le boîtier (14, 16, 64) pour couper une électrode de soudage à l'aide du bord tranchant (42), et

(c) le bord tranchant (42) forme un plan (44) se trouvant dans le plan du disque d'affûtage restant de sorte que, sur son pourtour, le disque d'affûtage rejoint le bord tranchant sans décalage.

4. Dispositif (10) selon l'une quelconque des revendications précédentes, **caractérisé en ce qu'**il est prévu deux disques d'affûtage (20, 22) l'un sur l'autre et de grain différent.

5. Dispositif (10) selon la revendication 4, **caractérisé en ce que** le bord tranchant (42) est prévu sur la face du disque d'affûtage tournant le dos à l'autre disque d'affûtage.

6. Disque d'affûtage (20, 22) destiné à être utilisé dans un dispositif (10) selon l'une quelconque des revendications précédentes, **caractérisé en ce qu'**un creux adapté au grain du matériau d'affûtage est prévu dans la zone (46) de la surface du disque d'affûtage (20, 22), prévue pour l'affûtage, dans laquelle est placé un matériau d'affûtage, la profondeur du creux correspondant à l'épaisseur moyenne du grain choisi et étant choisie de sorte que l'épaisseur du disque d'affûtage est essentiellement constante sur toute la surface.

7. Disque d'affûtage (20, 22) selon la revendication 6, **caractérisé en ce que** le creux s'étend d'une zone médiane (50) non recouverte d'un revêtement jusqu'au bord du disque d'affûtage.

8. Disque d'affûtage selon la revendication 6 ou 7, **caractérisé en ce que**

(a) le disque d'affûtage présente un bord tranchant (42) rétréci, et
(b) le bord tranchant forme un plan se trouvant dans le plan du disque d'affûtage restant de sorte que, sur son pourtour, le disque d'affûtage rejoint le bord tranchant sans décalage.

9. Procédé pour la fabrication d'un dispositif (10) pour l'usinage d'électrodes de soudage à l'aide d'un disque d'affûtage (20 ; 22) à grain choisi, entraîné par un moteur d'entraînement via un arbre (30) et qui est en rotation dans un boîtier (14, 16), le boîtier (14, 16) prévoyant au moins un percement (76, 78) pour guider une électrode de soudage à usiner dans une position définie par rapport au disque d'affûtage (20 ; 22), **caractérisé en ce qu'**un creux adapté au grain du matériau d'affûtage est prévu dans la zone (46) de la surface du disque d'affûtage (20, 22), prévue pour l'affûtage, dans laquelle est placé un matériau d'affûtage, la profondeur du creux correspondant à l'épaisseur moyenne du grain choisi et étant choisie de sorte que l'épaisseur du disque d'affûtage est essentiellement constante sur toute la surface.

Fig. 1

Fig. 2

Fig. 3

Fig. 4d

52
48
50
20
46
42

44

20

38
50
42
40

Fig. 4b

Fig. 4c

52
42
44
20
48
46
50

Fig. 4a

50
20
38
46
42
40
44

Fig. 4e

S_Be,ges

S_Roh

S_Be

S_max

D_Roh,F

D_max,F

D_Roh,S

D_max,S

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10010520 A1
- DE 10208914 A1
- DE 6600540 U
- DE 10243210 B3
- DE 102006052904 A1